Europäisches Patentamt

European Patent Office

Office européen des brevets

(19)

(11) Publication number: **0 287 156 B1**

(12) **EUROPEAN PATENT SPECIFICATION**

(45) Date of publication of patent specification: **03.06.92**　(51) Int. Cl.⁵: **A01F 15/07**

(21) Application number: **88200656.2**

(22) Date of filing: **07.04.88**

(54) **Round baler with system for automatically controlling bale shape and method of forming bales.**

(30) Priority: **13.04.87 US 37372**
**13.04.87 US 37490**

(43) Date of publication of application:
**19.10.88 Bulletin 88/42**

(45) Publication of the grant of the patent:
**03.06.92 Bulletin 92/23**

(84) Designated Contracting States:
**DE FR GB**

(56) References cited:
**EP-A- 0 060 956**　**DE-A- 3 248 066**
**FR-A- 2 344 215**　**GB-A- 2 044 170**
**US-A- 4 426 833**　**US-A- 4 517 795**

(73) Proprietor: **FORD NEW HOLLAND, INC. (a Delaware corp.)**
**500 Diller Avenue**
**New Holland Pennsylvania 17557(US)**

(72) Inventor: **Sheehan, Ronald T.**
**2166 Coventry Road**
**Lancaster, PA 17557(US)**
Inventor: **Vanginhoven, Robert M.**
**14 Horseshoe Drive**
**Lancaster, PA 17557(US)**
Inventor: **Schlotterbeck, Stephen C.**
**Route 2**
**New Holland, PA 17557(US)**

(74) Representative: **Vandenbroucke, Alberic T.J.**
**FORD NEW HOLLAND N.V. Leon Claeysstraat 3A**
**B-8210 Zedelgem(BE)**

## Description

This invention relates generally to round balers and, in particular, to a system for automatically controlling bale shape in round balers on the one hand and to a method of forming bales in such round balers on the other hand.

During operation of a round baler, it is often necessary to weave the round baler back and forth in a zigzag pattern on the windrow of crop material being picked up and baled. This is because the windrows of crop material are typically much narrower in width than the pickups and the baling chambers of round balers. Without the weaving action, there is a tendency for the bales formed in round balers to be barrel-shaped instead of uniformly cylindrical. Although the proper weaving of a round baler in a zigzag pattern overcomes the problem of poorly shaped bales, it requires that the operator constantly remembers when to weave the baler. This causes operator fatigue.

In an attempt to overcome or at least alleviate this problem, it has already been proposed, as appears from FR-A-2.579.063, to equip a round baler with a bale shape monitoring system for providing guidance to the operator for weaving the baler transversely across the windrow to be baled in response to any differential being detected in the diameters at or adjacent the opposite ends of the bale being formed.

In further developments, it also has already been proposed to fully automate this weaving operation and therefore, EP-A-0.060.956 suggests to provide a pair of transversely spaced apart sensors which are disposed relative to the bale chamber and are coupled to an electrical comparator system in a manner to detect any differential in the diameters at transversely spaced apart locations of the bale being formed. The electrical comparator system further is coupled to a hydraulic position control system in a manner to automatically cause a weaving of the baler transversely of the windrow when a differential in said diameters of the bale under formation is detected. However, this automatic system will not take any corrective action when, while the diameters at the location of the sensors increase evenly, more material is fed into the centre of the bale chamber than at the opposite ends thereof, which will result in the formation of a barrel shaped bale.

It is an object of the present invention to provide an automatic bale shape monitoring system for round balers and a method of forming bales in round balers which prevent the formation of as well barrel shaped as conical shaped bales while reducing operator fatigue.

According to the present invention a round baler is provided which is of the type having an expandable bale chamber delimited, at least in part, by bale forming means which, during bale formation, gradually move outwardly to provide for bale chamber expansion; said baler including means for weaving the baler transversely across the width of a crop windrow to be baled to thereby form well shaped round bales and actuator means operatively associated with the weaving means for automatically controlling the operation of said weaving means and

said baler being characterized in that
said actuator means comprise a single sensor means which operatively is associated with said movable bale forming means in a manner to generate, in response to the expanding movement of said bale forming means as the formation of a bale in the bale chamber progresses, consecutive signals which control said operation of said weaving means.

Preferably the actuator means comprise a toggle mechanism which is operable to toggle between first and second positions and to alternately produce control signals at first and second terminals thereof in response to the increasing diameter of a bale being formed in the bale chamber; said first and second terminals being coupled to the weaving means in a manner to actuate said weaving means for displacing the round baler in one transverse direction relative to the windrow to be picked up when a control signal is produced at the first terminal and displacing the round baler in the opposite transverse direction relative to said windrow when a control signal is produced at the second terminal. The toggle mechanism is toggled to the first terminal in response to a predetermined increase in the diameter of a bale being formed in the bale chamber and subsequently is toggled from the first terminal to the second terminal in response to a further predetermined increase in the diameter of a bale being formed in the bale chamber.

In the preferred embodiment, the round baler also comprises a drawbar which is pivotally coupled to the baler base frame. In this embodiment, the weaving means comprise :
- a hydraulic cylinder extending between said drawbar and said base frame; and
- a valve operatively coupled to said cylinder and the terminals of said toggle mechanism for controlling the fluid flow to and from said cylinder in response to the consecutive toggling positions of the toggle mechanism so as to cause alternate contraction and extension of said cylinder and hence, also alternate pivotal movement of the drawbar relative to the base frame, as the diameter of a bale being formed in the bale chamber increases.

The weaving means preferably further also comprise a pair of limit switches which are operatively coupled between the terminals of the toggle mechanism and the valve on the one hand and which are operatively associated with the drawbar on the other hand for limiting, upon each toggling of the toggle mechanism, actuation of said valve and hence, also limiting the corresponding extension and contraction movements of the cylinder.

According to another aspect of the invention a method is provided for forming roll bales in a round baler of the type having an expandable bale chamber delimited, at least in part, by bale forming means which, during bale formation, gradually move outwardly to provide for bale chamber expansion; said method including the steps of:

- positioning the round baler generally transversely offset in one direction relative to the windrow to be baled upon the generation of a first signal,
- repositioning the round baler generally transversely offset in the opposite direction relative to the windrow to be baled upon the generation of a second signal and
- repeating the positioning and repositioning steps until a bale of desirable size is formed and

     being characterized in that it also includes the steps of:

- generating said first signal in response to a predetermined increase in the diameter of the roll bale being formed in the bale chamber;
- generating the further signal in response to a further predetermined increase in the diameter of said roll bale being formed in the bale chamber and
- repeating, until said bale of desirable size is formed, the first and second generating steps to thereby cause said repetition of said positioning and said repositioning steps.

A round baler and a method in accordance with the present invention will now be described in greater detail, by way of example, with reference to the accompanying drawings, in which:

Fig. 1 is a right side elevation view of a round baler embodying a bale shape monitoring system according to the present invention;

Fig. 2 is view of a portion of the round baler of Fig. 1 illustrating various components in another position;

Fig. 3 is an enlarged side elevation view of the bale shape monitor apparatus shown in Figs. 1 and 2 and which illustrates various components in one position in full lines and the same components in another position in phantom lines.

Fig. 4 is a sectional view taken along lines 4-4 in Fig. 3;

Fig. 5 is a schematic view of a bale shape monitoring system;

Figs. 6 and 7 are diagrammatic plan views of a round baler during operation thereof and utilizing the system illustrated Figures 1 to 5; and

Fig. 8 is a schematic view of an automatic bale shape controlling system according to the present invention.

The terms "forward", "rearward", "left" and "right" used in connection with the baler and/or components thereof are determined with reference to the direction of forward operative travel of the baler and should not be considered as limiting. Also the terms "upper" and "lower" are used principally throughout this specification for convenience and it should be understood that these terms equally are not intended to be limiting.

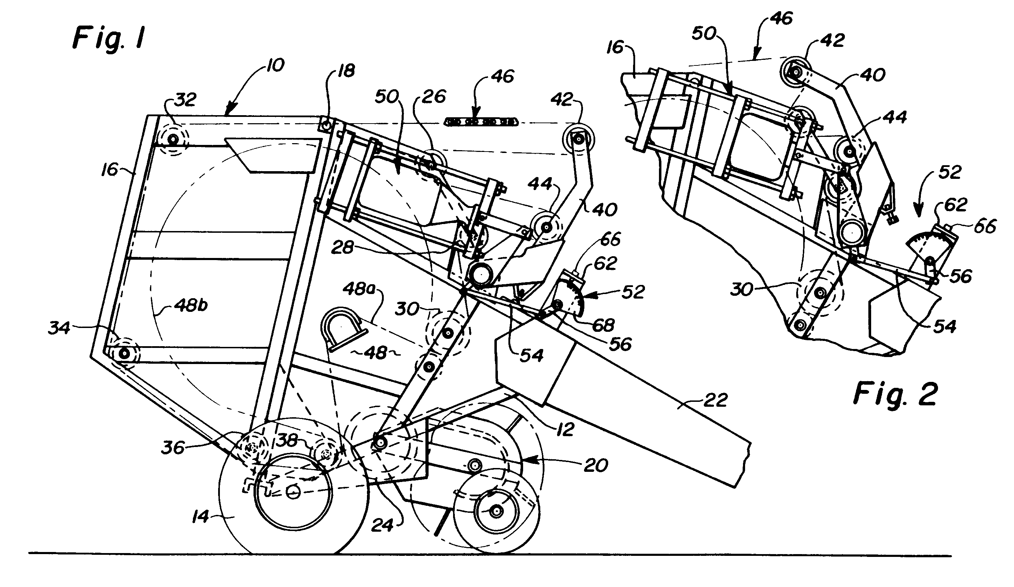

Referring to Fig. 1, the round baler 10 shown therein is generally of the type as disclosed in US-A-4,426,833, incorporated herein by reference. The round baler 10 includes a base frame 12 supported by a pair of wheels 14 and an auxiliary frame or tailgate 16 pivotally connected to the base frame 12 by stub shafts 18. A pickup mechanism 20 is mounted on the base frame 12 for picking up windrowed crop material, and a tongue 22 provided on the base frame 12 is adapted for connection to a tractor (not shown).

A floor roller 24 and guide members 26,28,30 are rotatably mounted on the base frame 12, and guide members 32,34,36,38 are rotatably mounted in the tailgate 16. An arm assembly 40 is rotatably mounted on the base frame 12 for rotational movement between a forward position shown in Fig. 1 and a rearward position shown in Fig. 2. The arm assembly 40 carries further rotatable guide members 42,44.

A flexible bale forming apron 46 is movably supported on the aforementioned guide members. The apron 46 may be of the chain and slat type as illustrated in Fig. 1 or the flat belt type. Since both of these apron types are well known, no further description thereof will be provided. The apron 46 has an inner course extending between the guide members 30 and 38 to define a bale forming chamber 48 which is expandable during bale formation. When the baler 10 is empty, the apron inner course is disposed in a wedge-shaped bale starting position 48a and the arm assembly 40, which assists in supporting the apron 46, is disposed in its forward position shown in Fig. 1. As a bale is formed in the baler 10, the bale forming chamber 48 expands while the apron inner course expands in length around the bale and the arm assembly 40 is moved toward its rearward position. When a full size bale has been formed in the baler 10, the apron inner course is disposed in the full bale position 48b and the arm assembly 40 is moved to its rearward position shown in Fig. 2. Air spring assemblies 50 are connected between the base frame 12 and the arm assembly 40 to urge the arm assembly 40 toward its forward position of Fig. 1. This maintains a predetermined amount of tension in the apron 46 during bale formation in order to control the density of bales formed in the round baler 10.

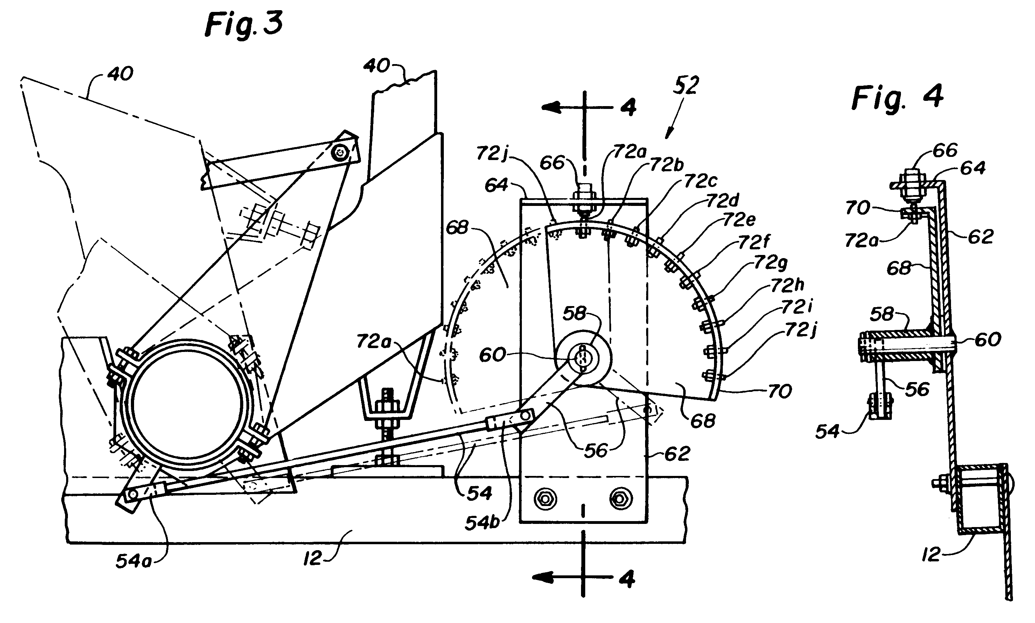

A bale shape monitor apparatus 52 is provided which includes a link 54 pivotally connected at one end 54a to the arm assembly 40. The other end 54b of the link 54 is pivotally connected to a lever 56 as best seen in Figs. 3 and 4. The lever 56 is fixed to a sleeve 58 which is rotatably mounted on a stub shaft 60. The stub shaft 60 is fixed to a bracket 62 that is bolted to the base frame 12. The flange portion 64 of the bracket 62 supports a magnetically activated switch 66 (such as part No. 103SR12A-1 manufactured by Microswitch Inc). This particular type of switch 66 is commonly referred to as a hall effect switch. A plate 68 is fixed to the sleeve 58 and the arcuate flange portion 70 thereof supports a plurality of magnets 72a-72j.

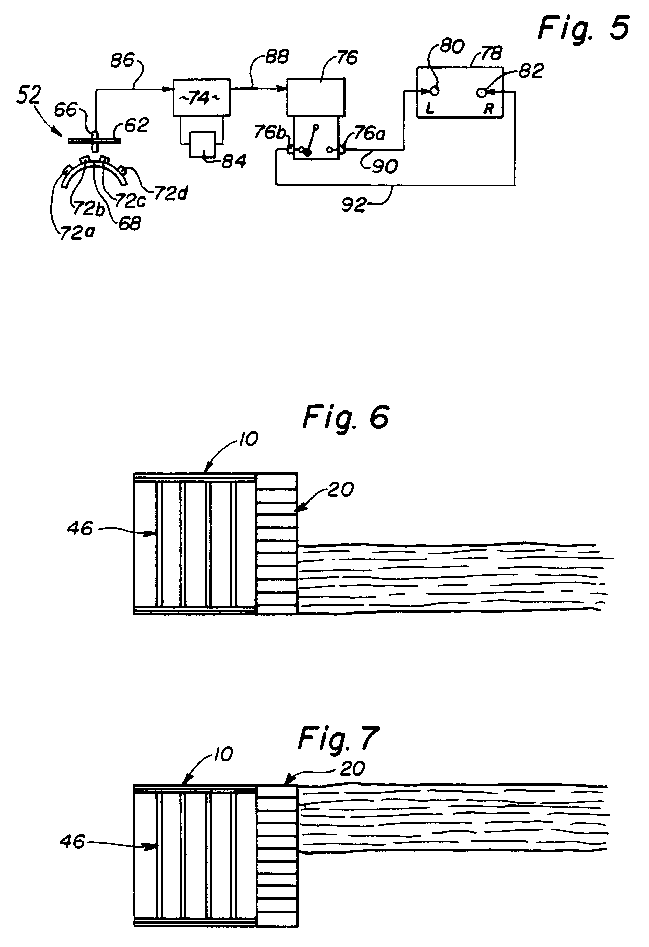

Referring now to Fig. 5, a system is illustrated therein which incorporates the aforedescribed bale shape monitor apparatus 52 and which further also includes a time delay 74 (such as part No. KD118 manufactured by Instrumentation and Control Systems Inc.), a latching relay 76 (such as part No. S89R11DBD1 manufactured by Potter and Brumfield) and an operator panel 78 with left and right indicator lights 80 and 82, respectively. The time delay 74 may be provided with an adjustable resistor 84 to allow adjustment of the time in a preselected range of, for example, 0.1 second to 10 seconds. The input of the time delay 74 is connected to the switch 66 by wiring 86, and the output of the time delay 74 is connected to the latching relay 76 by wiring 88. One terminal 76a of the latching relay 76 is connected by wiring 90 to the left indicator light 80 on the control panel 78 while the other terminal 76b of the latching relay 76 is connected by wiring 92 to the right indicator light 82 on the operator panel 78.

When the inner course of the apron 46 is in its bale starting position 48a and the arm assembly 40 is in its forward position as shown in Fig. 1, the various parts of the bale shape monitor apparatus 52 will be disposed in the positions shown in full lines in Fig. 3. The plate 68 will be positioned so that the first magnet 72a is in substantial alignment with the switch 66. The clearance between magnet 72a and the switch 66 is preferably between 1 and 7 mm. Activation of the system of Fig. 5 causes the right indicator light 82 to be illuminated while the left indicator light 80 is extinguished.

The operator then starts towing the baler 10 across a field along a windrow of crop material with the pickup 20 aligned to feed crop material into the right side of the bale forming chamber 48 as illustrated in Fig. 6. As the crop material is formed into a roll bale in the bale forming chamber 48, the inner course of apron 46 expands in length and the arm assembly 40 rotates from its forward position shown in Fig. 1 toward its rearward position shown in Fig. 2. This rotation of the arm assembly 40 causes rotation of the plate 68 carrying the magnets 72a- 72j in a counterclockwise direction in Fig. 3. When the plate 68 is rotated far enough so that the second magnet 72b (to the right of magnet 72a in Fig. 3) becomes substantially aligned with the switch 66, a signal is sent via the wiring 86 to activate the time delay 74. If the second magnet 72b remains substantially aligned with the switch 66 during the entire period of time (for example, 1 to 2 seconds) for which the time delay 74 is set, a signal is sent via the wiring 88 to actuate the latching relay 76. The latching relay 76 will then toggle from terminal 76b to terminal 76a thereby illuminating the left indicator light 80 via the wiring 90 and simultaneously extinguishing the right indicator light 82.

The operator then weaves the baler 10 toward the right along the windrow of crop material so that the pickup 20 is aligned to feed crop material into the left side of bale forming chamber 48 as illustrated in Fig. 7. As bale formation continues in the bale forming chamber 48, the arm assembly 40 continues to rotate toward its rearward position shown in Fig. 2 thereby causing further rotation of the plate 68 which is connected to the arm assembly 40 by the link 54 and the lever 56. This further rotation of the plate 68 results in the third magnet 72c (to the right of magnet 72b in Fig. 3) becoming substantially aligned with the switch 66. A signal is again sent via the wiring 86 to activate the time delay 74. Should the third magnet 72c remain in substantial alignment with the switch 66 for the duration of the setting of the time delay 74, another signal will be sent via the wiring 88 to cause the latching relay 76 to toggle back from terminal 76a to terminal 76b. This results in reillumination of the right indicator light 82 and simultaneous extinguishing of the left indicator light 80. The operator subsequently weaves the baler 10 back toward the left along the windrow of crop material so that the pickup 20 is again aligned to feed crop material into the right side of the bale forming chamber 48.

As bale formation continues in the bale forming chamber 48, the arm assembly 40 will continue to be rotated toward its rearward position shown in Fig. 2. This rotation of the arm assembly 40 will cause the left and right indicator lights 80 and 82, respectively, to be alternately illuminated by the bale shape monitor apparatus 52. Consequently, the operator will be given an indication or signal when to weave the baler 10 to feed crop material into the other side of the bale forming chamber 48 of the baler 10. It will be understood that proper use of the system shown in Fig. 5 results in the formation of bales which are uniformly cylindrical across their width.

The purpose of the time delay 74 is to prevent a false signal which may be caused by a bouncing motion of the arm assembly 40. During bale formation, the arm assembly 40 normally rotates smoothly from its forward position shown in Fig. 1 toward its rearward position shown in Fig. 2. However, under adverse conditions such as in the event of an egg-shaped bale (as seen when looking in the direction of the axis of the bale), the arm assembly 40 may bounce back and forth during its rotational movement. In order to ensure that the arm assembly 40 has rotated sufficiently far to a new position and is not in a bouncing motion, each of the magnets 72a-72j must remain substantially aligned with the switch 66 for the entire duration of the time setting of the time delay 74 or the time delay 74 will be automatically reset and there will be no change in the indicator lights 80 and 82.

It will be remarked that, although the above described baler 10 has bale forming means in the form of an apron chain 46 which extends across the full width of the bale chamber 48 and the bale shape monitor means 52, 74-92 are operably associated with said bale forming means via only one arm means 40, said bale shape monitor means 52, 74-92 nevertheless generate two distinct signals, one of which suggests to feed more crop material into one side of the bale chamber 48 and the other one of which suggests to feed more crop material into the opposite side of the bale chamber 48. In other words, even though the full width bale forming means 46 expand in a fully parallel manner during operation, the bale shape monitor means 52, 74-92 nevertheless generate said two distinct signals.

The apparatus described so far is identical to the apparatus which is subject of Applicant's earlier EP-A-0.282.128; the content of which is included herein by reference.

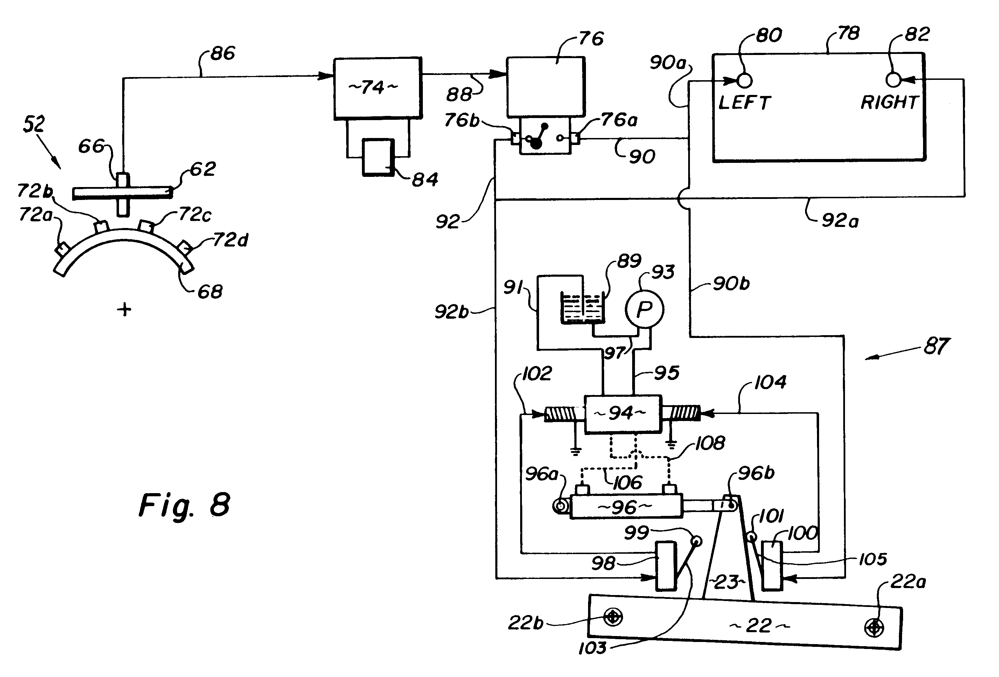

Referring now to Fig. 8, there is illustrated a system 87 for automatically controlling the shape of a bale being formed in the bale chamber of a round baler and which is coupled to the bale shape apparatus 52 and the system of Fig. 5. The system 87 shown in Fig. 8 includes a solenoid actuated spool valve 94 such as part no. 644122 available from Control Concepts, Inc., a hydraulic cylinder unit 96 of the double acting type and a pair of limit switches 98 and 100 such as part no. 467820 available from Microswitch Inc. The terminal 76a of the latching relay 76 is connected by wiring 90,90a to the left indicator light 80 on the operator panel 78 and by wiring 90,90b to the input of limit switch 100. The other terminal 76b of the latching relay 76 is connected by wiring 92,92a to the right indicator light 82 on the operator panel 78 and by wiring 92,92b to the input of the limit switch 98. The outputs of the limit switches 98 and 100 are connected to the valve 94 by wiring 102 and 104, respectively. The valve 94 is connected to the opposite ends of the hydraulic cylinder 96 by fluid conduits 106,108. The valve 94 is also connected to a reservoir 89 by a fluid conduit 91 and to a pump 93 by a fluid conduit 95. The pump 93 is connected to the reservoir 89 by a fluid conduit 97.

One end 96a of hydraulic cylinder unit 96 is pivotally connected to the baler frame 12 while the other end 96b thereof is pivotally connected to a plate 23 attached to the baler tongue 22. In this embodiment, one end 22a of the tongue 22 is pivoted to the tractor (not shown) and the other end 22b of the tongue 22 is pivoted to the frame 12. The limit switches 98,100 are supported by the frame 12 so that rollers 99,101 may be engaged by the plate 23. The rollers 99,101 are carried on spring loaded arms 103,105 which serve to open the limit switches 98,100 when depressed.

It will be understood from the foregoing description that when the latching relay 76 in Fig. 8 is toggled from terminal 76a to terminal 76b, the right indicator light 82 is illuminated and the left indicator light 80 is extinguished. Simultaneously, a signal is sent via the wiring 92,92b to the limit switch 98 which, at that moment, normally is closed. The limit switch 98 transmits this signal via wiring 102 to the valve 94 which thus is actuated by' its solenoid to cause conduit 106 to communicate with conduit 91 and to cause conduit 108 to communicate with conduit 95. Fluid is drawn from the reservoir 89 by the pump 93 via the conduit 97 and then delivered by the pump 93 to one end of the hydraulic cylinder unit 96 via the conduits 95 and 108. Fluid is simultaneously returned from the other end of the hydraulic cylinder unit 96 to the reservoir 89 via the conduits 106 and 91. This causes contraction of the hydraulic cylinder unit 96 thereby pivoting the baler tongue 22 in a direction to automatically weave the baler 10 toward the right along the windrow of crop material until the pickup 20 is positioned to feed crop material into the left side of the bale forming chamber 48 as shown in Fig. 7. When the tongue 22 has pivoted far enough to cause plate 23 to contact the roller 99 and thereby fully depress the arm 103, the limit switch 98 is opened. This causes the valve 94 to close both of the conduits 106 and 108. Further contraction of the hydraulic cylinder unit 96 ceases and the tongue 22 remains in the same location.

Bale formation continues in the bale forming chamber 48, as previously described, thereby causing rotation of the arm assembly 40 and simultaneous rotation of the plate 68 in a manner which causes the latching relay 76 to toggle from terminal 76b to terminal 76a. The right indicator light 82 is extinguished and the left indicator light 80 is illuminated. Simultaneously, a signal is sent via the wiring 90,90b to the limit switch 100 which, at that moment, is closed. The limit switch 100 transmits this signal via wiring 104 to the valve 94 which is actuated by its solenoid to cause conduit 106 to communicate with conduit 95 and to cause conduit 108 to communicate with conduit 91. Fluid is drawn from the reservoir 89 by the pump 93 via the conduit 97 and then delivered by the pump 93 to the hydraulic cylinder unit 96 via the conduits 95 and 106. Fluid is simultaneously returned from the hydraulic cylinder unit 96 to the reservoir 89 via the conduits 108 and 91. This causes extension of the hydraulic cylinder unit 96 thereby pivoting the baler tongue 22 in the opposite direction to automatically weave the baler 10 toward the left along the windrow of crop material until the pickup 20 is positioned to feed crop material into the right side of the bale forming chamber 48 as shown in Fig. 6. When the tongue 22 has pivoted far enough to cause plate 23 to contact the roller 101 and thereby fully depress the arm 105, the limit switch 100 is opened. This causes the valve 94 to close both of the conduits 106 and 108. Further extension of the hydraulic cylinder unit 96 ceases and the tongue 22 remains in the same location.

As bale formation continues in the bale forming chamber 48, the baler 10 will be automatically weaved back and forth to position the baler 10 to alternately feed crop material into the right and left sides of the bale forming chamber 48. It will be understood that proper use of the system of Fig. 8 automatically results in the formation of bales which are uniformly cylindrical. Accordingly, the system of Fig. 8 prevents formation of poorly shaped bales while reducing operator fatigue.

While the preferred structure in which the principles of the present invention have been incorporated, is shown and described above, it is to be understood that the invention is not to be limited to the particular details thus presented but, in fact, widely different means may be employed in the practice of the broader aspects of this invention. As an example, the invention is not limited to a round baler having bale forming means in the form `of an apron chain. Instead, the bale forming means equally well may be formed by an expandable apron belt which eventually may extend across the full width of the bale chamber 48. Alternatively the bale forming means may consist of a plurality of side- by-side extending belts which equally define an expandable bale forming chamber. In still another alternative arrangement the bale forming means may be formed by a plurality of roller members which extend across the full width of the bale chamber and which are movably mounted so as to permit bale chamber expansion during bale formation.

## Claims

1. A round baler (10) of the type having an expandable bale chamber (48) delimited, at least in part, by bale forming means (46) which, during bale formation, gradually move outwardly to provide for bale chamber expansion; said baler (10) including means (87) for weaving the baler (10) transversely across the width of a crop windrow to be baled to thereby form well shaped round bales and actuator means (52, 76) operatively associated with the weaving means (87) for automatically controlling the operation of said weaving means (87) and

   said baler being characterized in that

   said actuator means (52, 76) comprise a single sensor means (52) which operatively is associated with said movable bale forming means (46) in a manner to generate, in response to the expanding movement of said bale forming means (46) as the formation of a bale in the bale chamber (48) progresses, consecutive signals which control said operation of said weaving means (87).

2. A round baler (10) according to claim 1, characterized in that said bale forming means (46) comprise bale forming rollers extending across the full width of the bale chamber (48); said rollers being movably mounted for enabling said bale chamber expansion during bale formation.

3. A round baler (10) according to claim 1, characterized in that said bale forming means (46) comprise endless apron means which extend across the full width of the bale forming chamber (48).

4. A round baler (10) according to claim 3, characterized in that the apron means are formed by apron chain means (46).

5. A round baler (10) according to claim 3, characterized in that the apron means are formed by apron belt means.

6. A round baler (10) according to any of the preceding claims characterized in that an arm means (40) is operatively associated with the movable bale forming means (46) for movement in unison therewith as the bale chamber (48) expands during bale formation and the sensor means (52) operatively is associated with said arm means (40).

7. A round baler (10) according to any of the preceding claims characterized in that the sensor means (52) comprises a magnetically activated switch (66) and a plurality of spaced apart magnets (72a-j) operatively associated with the movable bale forming means (46) for movement past said switch (66) in unison with the movement of said bale forming means (46) as the bale chamber (48) expands during bale formation; the arrangement being such that, as any one of said magnets (72a-j) is positioned in the vicinity of said switch (66), the latter is activated thereby to generate a signal which is used for controlling the operation of said weaving means (87).

8. A round baler (10) according to claim 7 when appended to claim 6 and characterized in that the switch (66) is mounted on a stationary support (62) and the magnets (72a-j) are mounted on a mounting member (68) which is rotatably supported adjacent said stationary support (62) and which is coupled via linkage means (54) to said arm means (40).

9. A round baler (10) according to claim 7 or 8 characterized in that the actuator means (52, 76) comprise a toggle mechanism (76) which has an input (88) connected to the switch (66) and which is operable to toggle between first and second positions upon receipt of consecutive signals from said switch (66) and to alternately produce control signals at first and second terminals (76a, 76b) thereof in response to the increasing diameter of the bale being formed in the bale chamber (48); said first and second terminals (76a, 76b) being coupled to the weaving means (87) `for displacing the round baler (10) in one transverse direction relative to the windrow to be picked up when a control signal is produced at the first terminal (76a) and displacing the round baler (10) in the opposite transverse direction relative to said windrow when a control signal is produced at the second terminal (76b).

10. A round baler (10) according to claim 9 characterized in that the toggle mechanism (76) is toggled to the first terminal (76a) in response to a predetermined increase in the diameter of the bale being formed in the bale chamber (48) and subsequently is toggled from the first terminal (76a) to the second terminal (76b) in response to a further predetermined increase in the diameter of said bale being formed in the bale chamber (48).

11. A round baler (10) according any of the preceding claims characterized in that the actuator means (52, 76) further also comprise means (74, 84) for preventing false signals to be applied to said weaving means (87).

12. A round baler (10) according to claim 11 when appended to either one of the claims 9 and 10 and characterized in that the means (74, 84) for preventing false signals comprise a time delay (74) having an input (86) connected to the switch (66) and an output (88) connected to the toggle mechanism (76).

13. A round baler (10) according to claim 12 characterized in that the time delay (74) is adjustable within a preselected range.

14. A round baler (10) according to claim 11 when appended to claim 9 or 10 or any of the claims 9, 10, 12 and 13 and characterized in that:
- a drawbar (22) is provided for towing the baler (10) behind a pulling tractor; said drawbar (22) being pivotally coupled to the baler base frame (12) and
- the weaving means (87) comprise, on the one hand, a hydraulic cylinder (96) extending between the drawbar (22) and the base frame (12) and, on the other hand, a valve (94) operatively coupled to said cylinder (96) and the terminals (76a, 76b) of said toggle mechanism (76) for controlling the fluid flow to and from said cylinder (96) in response to the consecutive toggling of the toggle mechanism (76) so as to cause alternate contraction an extension of said cylinder (96) and hence, also alternate pivotal movement of the drawbar (22) relative to the base frame (12), as the diameter of the bale being formed in the bale chamber (48) increases.

15. A round baler (10) according to claim 14, characterized in that the weaving means (87) further also comprise a pair of limit switches (98, 100) which are operatively coupled between the terminals (76a, 76b) of the toggle mechanism (76) and the valve (94) on the one hand and which are operatively associated with the drawbar (22) on the other hand for limiting, upon each toggling of the toggle mechanism (76), actuation of said valve (94) and hence, also limiting the corresponding extension and contraction movements of the cylinder (96).

16. A round baler (10) according to claim 11 when appended to claim 9 or 10 or any of the claims 9, 10, and 12 to 15 and characterized in that it further also comprises indicator lights (80, 82) which operatively are coupled to the first and second terminals (76a, 76b) of the toggle mechanism (76) in a manner to alternately be illuminated in response to the control signals generated at said terminals (76a, 76b).

17. A method of forming roll bales in a round baler (10) of the type having an expandable bale chamber (48) delimited, at least in part, by bale forming means (46) which, during bale formation, gradually move outwardly to provide for bale chamber expansion; said method including the steps of:
- positioning the round baler (10) generally transversely offset in one direction relative to the windrow to be baled upon the generation of a first signal,
- repositioning the round baler (10) generally transversely offset in the opposite direction relative to the windrow to be baled upon the generation of a second signal and
- repeating the positioning and repositioning steps until a bale of desirable size is formed and
      being characterized in that it also includes the steps of:
- generating said first signal in response to a predetermined increase in the diameter of the roll bale being formed in the bale chamber (48);
- generating the further signal in response to a further predetermined increase in the diameter of said roll bale being formed in the bale chamber (48) and
- repeating, until said bale of desirable size is formed, the first and second generating steps to thereby cause said repetition of said positioning and said repositioning steps.

**Revendications**

1. Ramasseuse-presse à balles rondes (10) du type comportant une chambre à balles extensible (48) délimitée, au moins en partie, par des moyens de formage de balles (46) qui, pendant la formation d'une balle, se déplacent progressivement vers l'extérieur pour permettre une extension de la chambre à balles; ladite ramasseuse-presse (10) comportant des moyens (87) permettant son déplacement en zigzag transversalement sur la largeur d'un andain de récolte destiné à être mis en balles, pour ainsi réaliser des balles rondes bien formées, et des moyens d'actionnement (52, 76) associés d'une manière fonctionnelle aux moyens de déplacement en zigzag (87) pour commander automatiquement le fonctionnement desdits moyens de déplacement en zigzag (87), et

   ladite ramasseuse-presse étant caractérisée en ce que lesdits moyens d'actionnement (52, 76) comportent un moyen détecteur (52) unique, associé d'une manière fonctionnelle auxdits moyens de formage de balles mobiles (46) de manière, en réponse au mouvement d'extension desdits moyens de formage de balles (46) au fur et à mesure que la formation d'une balle dans la chambre à balles (48) progresse, à générer des signaux consécutifs qui commandent ledit fonctionnement desdits moyens de déplacement en zigzag (87).

2. Ramasseuse-presse à balles rondes (10) selon la revendication 1, caractérisée en ce que lesdits moyens de formage de balles (46) comportent des rouleaux de formage de balles qui s'étendant sur toute la largeur de la chambre à balles (48); lesdits rouleaux étant montés mobiles en vue de permettre ladite extension de la chambre à balles pendant la formation d'une balle.

3. Ramasseuse-presse à balles rondes (10) selon la revendication 1, caractérisée en ce que lesdits moyens de formage de balles (46) comportent des moyens formant tapis sans fin qui s'étendent sur toute la largeur de la chambre de formage de balles (48).

4. Ramasseuse-presse à balles rondes (10) selon la revendication 3, caractérisée en ce que les moyens formant tapis sont constitués par des moyens formant tapis à chaînes (46).

5. Ramasseuse-presse à balles rondes (10) selon la revendication 3, caractérisée en ce que les moyens formant tapis sont constitués par des moyens formant tapis à courroie.

6. Ramasseuse-presse à balles rondes (10) selon l'une quelconque des revendications précédentes, caractérisée en ce qu'un moyen formant bras (40) est associé d'une manière fonctionnelle aux moyens de formage de balles mobiles (46) en vue de se déplacer en synchronisme avec ceux-ci au fur et à mesure que la chambre à balles (48) s'étire pendant la formation d'une balle, le moyen détecteur (52) étant associé d'une manière fonctionnelle audit moyen formant bras (40).

7. Ramasseuse-presse à balles rondes (10) selon l'une quelconque des revendications précédentes, caractérisée en ce que le moyen détecteur (52) comporte un commutateur actionné magnétiquement (66) et plusieurs aimants (72a-j) espacés les uns des autres, qui sont associés d'une manière fonctionnelle aux moyens de formage de balles mobiles (46) en vue de se déplacer, en passant devant ledit commutateur (66), en synchronisme avec le déplacement desdits moyens de formage de balles (46), au fur et à mesure que la chambre à balles (48) s'étire pendant la formation d'une balle; le dispositif étant tel que, lorsque l'un quelconque desdits aimants (72a-j) est positionné à proximité dudit commutateur (66), ce dernier est actionné pour ainsi générer un signal qui est utilisé pour commander le fonctionnement desdits moyens de déplacement en zigzag (87).

8. Ramasseuse-presse à balles rondes (10) selon la revendication 7, lorsque celle-ci est dépendante de la revendication 6, et caractérisée en ce que le commutateur (66) est monté sur un support fixe (62), tandis que les aimants (72a-j) sont montés sur un organe de montage (68) supporté mobile en rotation à proximité dudit support fixe (62) et relié audit moyen formant bras (40) par l'intermédiaire de moyens formant tringlerie (54).

9. Ramasseuse-presse à balles rondes (10) selon la revendication 7 ou 8, caractérisée en ce que les moyens d'actionnement (52, 76) comportent un mécanisme à bascule (76) qui possède une entrée (88) reliée au commutateur (66) et qui est apte à opérer pour basculer entre des première et seconde positions lors de la réception de signaux consécutifs provenant dudit commutateur (66) et pour générer alternativement des signaux de commande au niveau de ses première et seconde bornes (76a, 76b) en réponse à une augmentation du diamètre de la balle en train d'être formée dans la chambre à balles (48); lesdites première et seconde bornes (76a, 76b) étant accouplées avec les moyens de déplacement en zigzag (87) en vue de déplacer la ramasseusepresse à balles rondes (10) dans une direction transversale par rapport à l'andain destiné à être ramassé, lorsqu'un signal de commande est généré au niveau de la première borne (76a), et de déplacer la ramasseuse-presse à balles rondes (10) dans la direction transversale opposée par rapport audit andain, lorsqu'un signal de commande est généré au niveau de la seconde borne (76b).

10. Ramasseuse-presse à balles rondes (10) selon la revendication 9, caractérisée en ce que le mécanisme à bascule (76) est basculé vers la première borne (76a) en réponse à une augmentation prédéterminée du diamètre de la balle en train d'être formée dans la chambre à balles (48), pour ensuite être basculé de la première borne (76a) vers la seconde borne (76b) en réponse à une augmentation supplémentaire prédéterminée du diamètre de ladite balle en train d'être formée dans la chambre à balles (48).

11. Ramasseuse-presse à balles rondes (10) selon l'une quelconque des revendications précédentes, caractérisée en ce que les moyens d'actionnement (52, 76) comportent également des moyens (74, 84) destinés à éviter que de faux signaux ne soient appliqués auxdits moyens de déplacement en zigzag (87).

12. Ramasseuse-presse à balles rondes (10) selon la revendication 11, lorsque celle-ci est dépendante de l'une ou l'autre des revendications 9 et 10, et caractérisée en ce que les moyens (74, 84) destinés à éviter de faux signaux comportent un dispositif de temporisation (74) qui a une entrée (86) reliée au commutateur (66) et une sortie (88) reliée au mécanisme à bascule (76).

13. Ramasseuse-presse à balles rondes (10) selon la revendication 12, caractérisée en ce que le dispositif de temporisation (74) est ajustable à l'intérieur d'une plage présélectionnée.

14. Ramasseuse-presse à balles rondes (10) selon la revendication 11, lorsque celle-ci est dépendante de la revendication 9 ou 10 ou selon l'une quelconque des revendications 9, 10, 12 et 13, et caractérisée en ce que:

- une barre d'attelage (22) est prévue pour remorquer la ramasseuse-presse (10) derrière un véhicule tracteur; ladite barre d'attelage (22) étant reliée d'une manière pivotante au châssis de base de ramasseuse-presse (12), et
- les moyens de déplacement en zigzag (87) comportent, d'une part, un vérin hydraulique (96) qui s'étend entre la barre d'attelage (22) et le châssis de base (12) et, d'autre part, une soupape (94) accouplée d'une manière fonctionnelle avec ledit vérin (96) et les bornes (76a, 76b) dudit mécanisme à bascule (76) pour commander l'écoulement d'un fluide en direction et à partir dudit vérin (96) en réponse au basculement consécutif du mécanisme à bascule (76), afin de provoquer une contraction et une extension alternées dudit vérin (96) et par conséquent également un mouvement de pivotement alterné de la barre d'attelage (22) par rapport au châssis de base (12), au fur et à mesure que le diamètre de la balle en train d'être formée dans la chambre à balles (48) augmente.

15. Ramasseuse-presse à balles rondes (10) selon la revendication 14, caractérisée en ce que les moyens de déplacement en zigzag (87) comportent également deux contacts de fin de course (98, 100) montés d'une manière fonctionnelle entre les bornes (76a, 76b) du mécanisme à bascule (76) et la soupape (94), d'une part, et associés d'une manière fonctionnelle à la barre d'attelage (22), d'autre part, pour, à chaque basculement du mécanisme à bascule (76), limiter un actionnement de ladite soupape (94) et par conséquent également les mouvements d'extension et de contraction correspondants du vérin (96).

16. Ramasseuse-presse à balles rondes (10) selon la revendication 11, lorsque celle-ci est dépendante de la revendication 9 ou 10 ou selon l'une quelconque des revendications 9, 10 et 12 à 15, et caractérisée en ce qu'elle comporte également des voyants lumineux (80, 82) reliés d'une manière fonctionnelle aux première et seconde bornes (76a, 76b) du mécanisme à bascule (76) de manière à être allumés alternativement en réponse aux signaux de commande générés au niveau desdites bornes (76a, 760).

17. Méthode pour former des balles cylindriques dans une ramasseuse-presse à balles rondes (10) du type comportant une chambre à balles extensible (48) délimitée, au moins en partie, par des moyens de formage de balles (46) qui, pendant la formation d'une balle, se déplacent progressivement vers l'extérieur pour permettre une extension de la chambre à balles; ladite méthode comportant les étapes qui consistent à :
  - positionner la ramasseuse-presse à balles rondes (10) de façon qu'elle soit décalée, d'une manière générale, transversalement dans une direction par rapport à l'andain destiné à être mis en balles, lorsqu'un premier signal est généré,
  - repositionner la ramasseuse-presse à balles rondes (10) de façon qu'elle soit décalée, d'une manière générale, transversalement dans la direction opposée par rapport à l'andain destiné à être mis en balles, lorsqu'un second signal est généré, et à
  - répéter les étapes de positionnement et de repositionnement jusqu'à ce qu'une balle de taille souhaitable soit formée, et
    étant caractérisée en ce qu'elle comporte également les étapes qui consistent à :
  - générer ledit premier signal en réponse à une augmentation prédéterminée du diamètre de la balle cylindrique en train d'être formée dans la chambre à balles (48);
  - générer le second signal en réponse à une augmentation supplémentaire prédéterminée du diamètre de ladite balle cylindrique en train d'être formée dans la chambre à balles (48), et à
  - répéter, jusqu'à ce que ladite balle de taille souhaitable soit formée, les première et seconde étapes de génération, pour ainsi provoquer ladite répétition desdites étapes de positionnement et de repositionnement.

**Patentansprüche**

1. Rundballenpresse (10) von einem Typ mit einer ausdehnbaren Ballenkammer (48), die zumindestens teilweise durch Ballenformungseinrichtungen (46) begrenzt ist, die sich während der Ballenbildung graduell nach außen bewegen, um die Ballenkammer-Ausdehnung zu erzielen, wobei die Rundballenpresse (10) Einrichtungen (87) zur Hin- und Herbewegung der Rundballenpresse (10) in Querrichtung über die Breite eines zu einem Ballen zu formenden Erntematerial-Schwades zur Bildung gutgeformter Rundballen und Betätigungseinrichtungen (52,76) einschließt, die betriebsmäßig mit den Hin- und Herbewegungseinrichtungen (87) verbunden sind, um automatisch die Betriebsweise der Hin- und Herbewegungseinrichtungen (87) zu steuern,
dadurch **gekennzeichnet,** daß die Betätigungseinrichtungen (52,76) eine einzige Meßfühlereinrichtung (52) einschließen, die betriebsmäßig den beweglichen Ballenformungseinrichtungen (46) in einer derartigen Weise zugeordnet ist, daß in Abhängigkeit von der Ausdehnungsbewegung der Ballenformungseinrichtungen (86) bei fortschreitender Bildung eines Ballens in der Ballenkammer (48) aufeinanderfolgende Signale erzeugt werden, die den Betrieb der Hin- und Herbewegungseinrichtung (87) steuern.

2. Rundballenpresse (10) nach Anspruch 1,

dadurch **gekennzeichnet,** daß die Ballenformungseinrichtungen (46) Ballenformungswalzen einschließen, die sich über die volle Breite der Ballenkammer (48) erstrecken, wobei diese Walzen beweglich befestigt sind, um die Ausdehnung der Ballenkammer während der Ballenbildung zu ermöglichen.

3. Rundballenpresse (10) nach Anspruch 1, dadurch **gekennzeichnet,** daß die Ballenformungseinrichtungen (46) endlose Gurteinrichtungen umfassen, die sich über die volle Breite der Ballenformungskammer (48) erstrecken.

4. Rundballenpresse (10) nach Anspruch 3, dadurch **gekennzeichnet,** daß die Gurteinrichtungen durch Gurtketteneinrichtungen (46) gebildet sind.

5. Rundballenpresse (10) nach Anspruch 3, dadurch **gekennzeichnet,** daß die Gurteinrichtungen durch Gurtbandeinrichtungen gebildet sind.

6. Rundballenpresse (10) nach einem der vorhergehenden Ansprüche, dadurch **gekennzeichnet,** daß eine Armeinrichtung (40) betriebsmäßig den beweglichen Ballenformungseinrichtungen (46) für eine Bewegung zusammen mit diesen verbunden ist, wenn sich die Ballenkammer (48) während der Ballenbildung ausdehnt, wobei die Meßfühlereinrichtung (52) betriebsmäßig mit den Armeinrichtungen (40) verbunden ist.

7. Rundballenpresse (10) nach einem der vorhergehenden Ansprüche, dadurch **gekennzeichnet,** daß die Meßfühlereinrichtung (52) einen magnetisch betätigten Schalter (66) und eine Mehrzahl mit Abstand voneinander angeordneten Magneten (72a - j) umfaßt, die betriebsmäßig mit den beweglichen Ballenformungseinrichtungen (46) für eine Bewegung entlang des Schalters (66) zusammen mit der Bewegung der Ballenformungseinrichtungen (46) verbunden sind, wenn sich die Ballenkammer (48) während der Ballenformung ausdehnt, wobei die Anordnung derart ist, daß, wenn irgendeiner der Magnete (72a - j) in der Nähe des Schalters (66) angeordnet ist, dieser hierdurch betätigt wird, um ein Signal zu erzeugen, das zur Steuerung des Betriebes der Hin- und Herbewegungseinrichtungen (87) verwendet wird.

8. Rundballenpresse (10) nach Anspruch 7 unter Rückbeziehung auf Anspruch 6, dadurch **gekennzeichnet,** daß der Schalter (66) auf einer stationären Halterung (62) befestigt ist, während die Magnete (72a - j) auf einem Befestigungsteil (68) befestigt sind, das benachbart zu der stationären Halterung (62) drehbar gehaltert ist und das über eine Gestängeeinrichtung (54) mit den Armeinrichtungen (40) gekoppelt ist.

9. Rundballenpresse (10) nach Anspruch 7 oder 8, dadurch **gekennzeichnet,** daß die Betätigungseinrichtungen (52,76) einen Kippmechanismus (76) einschließen, der einen mit dem Schalter (66) verbundenen Eingang (88) aufweist und der betätigbar ist, um bei Empfang von aufeinanderfolgenden Signalen von dem Schalter (66) zwischen ersten und zweiten Stellungen zu kippen und abwechselnd Steuersignale an seinen ersten und zweiten Anschlüssen (76a, 76b) in Abhängigkeit von dem zunehmenden Durchmesser des in der Ballenkammer (48) geformten Ballens zu erzeugen, wobei die ersten und zweiten Anschlüsse (76a,76b) mit den Hin- und Herbewegungseinrichtungen (87) gekoppelt sind, um die Rundballenpresse (10) in einer Querrichtung bezüglich des aufzunehmenden Schwades zu bewegen, wenn ein Steuersignal an dem ersten Anschluß (76a) erzeugt wird, und um die Rundballenpresse (10) in der entgegengesetzten Querrichtung bezüglich des Schwades zu bewegen, wenn ein Steuersignal an dem zweiten Anschluß (76b) erzeugt wird.

10. Rundballenpresse (10) nach Anspruch 9, dadurch **gekennzeichnet,** daß der Kippmechanismus (76) in Abhängigkeit von einer vorgegebenen Zunahme des Durchmessers des in der Ballenkammer (48) geformten Ballens zu dem ersten Anschluß (76a) gekippt wird und nachfolgend in Abhängigkeit von einer weiteren vorgegebenen Zunahme des Durchmessers des in der Ballenkammer (48) geformten Ballens von dem ersten Anschluß (76a) auf den zweiten Anschluß (76b) gekippt wird.

11. Rundballenpresse (10) nach einem der vorhergehenden Ansprüche, dadurch **gekennzeichnet,** daß die Betätigungseinrichtung (52,76) weiterhin Einrichtungen (74,84) zum Verhindern der Zuführung falscher Signale an die Hin- und Herbewegungseinrichtung (87) umfaßt.

12. Rundballenpresse (10) nach Anspruch 11 unter Rückbeziehung auf einen der Ansprüche 9 und 10, dadurch **gekennzeichnet,** daß die Einrichtungen (74,84) zur Verhinderung von fehlerhaften Signalen eine Zeitverzögerungseinrichtung (74) einschließen, die einen mit dem Schalter (66) verbundenen Eingang (86) und einen mit dem Kippmechanismus (76) verbundenen Ausgang (88) aufweist.

13. Rundballenpresse (10) nach Anspruch 12, dadurch **gekennzeichnet,** daß die Zeitverzögerungseinrichtung (74) innerhalb eines vorausgewählten Bereiches einstellbar ist.

14. Rundballenpresse (10) nach Anspruch 11 unter Rückbeziehung auf Anspruch 9 oder 10 oder einen der Ansprüche 9, 10, 12 und 13, dadurch **gekennzeichnet,** daß:
    - eine Zugstange (22) zum Ziehen der Rundballenpresse (10) hinter einem Zugtraktor vorgesehen ist, wobei die Zugstange (22) schwenkbar mit dem Hauptrahmen (12) der Rundballenpresse gekoppelt ist, und
    - die Hin- und Herbewegungseinrichtungen (87) einerseits einen Hydraulikzylinder (96), der sich zwischen der Zugstange (22) und dem Hauptrahmen (12) erstreckt, und andererseits ein Ventil (94) umfassen, das betriebsmäßig mit dem Zylinder (96) und den Anschlüssen (76a,76b) des Kippmechanismus (76) gekoppelt ist, um den Strömungsmittelfluß zu und von dem Zylinder (96) in Abhängigkeit von dem aufeinanderfolgenden Kippen des Kippmechanismus (76) zu steuern, so daß eine abwechselnde Zusammenziehung oder Ausdehnung des Zylinders (96) und damit auch eine abwechselnde Schwenkbewegung der Zugstange (22) gegenüber dem Hauptrahmen (12) hervorgerufen wird, wenn der Durchmesser des in der Ballenkammer (48) geformten Ballens zunimmt.

15. Rundballenpresse (10) nach Anspruch 14, dadurch **gekennzeichnet,** daß die Hin- und Herbewegungseinrichtungen (87) weiterhin zwei Grenzschalter (98, 100) umfassen, die einerseits betriebsmäßig zwischen den Anschlüssen (76a,76b) des Kippmechanismus (76) und dem Ventil (94) eingeschaltet und andererseits betriebsmäßig mit der Zugstange (22) verbunden sind, um bei jedem Kippen des Kippmechanismus (76) die Betätigung des Ventils (94) zu begrenzen, und damit auch die entsprechenden Ausdehnungs- und Zusammenziehungsbewegungen des Zylinders (96) zu begrenzen.

16. Rundballenpresse (10) nach Anspruch 11 unter Rückbeziehung auf Anspruch 9 oder 10 oder einen der Ansprüche 9, 10 und 12 bis 15, dadurch **gekennzeichnet,** daß sie weiterhin Anzeigelampen (80,82) umfaßt, die betriebsmäßig mit den ersten und zweiten Anschlüssen (76a,76b) des Kippmechanismus (76) derart verbunden sind, daß sie abwechselnd in Abhängigkeit von den Steuersignalen beleuchtet werden, die an den Anschlüssen (76a,76b) erzeugt werden.

17. Verfahren zur Bildung von Rundballen in einer Rundballenpresse (10) von dem Typ, der eine ausdehnbare Ballenkammer (48) aufweist, die zumindestens teilweise durch Ballenformungseinrichtungen (46) umgrenzt ist, die sich während der Ballenformung graduell nach außen bewegen, um die Ballenkammer-Ausdehnung zu erzielen, wobei das Verfahren die folgenden Schritte einschließt:
    - Positionieren der Rundballenpresse (10) allgemein mit in Querrichtung verlaufender Versetzung in einer Richtung bezüglich des zu einem Ballen zu formenden Schwades bei der Erzeugung eines ersten Signals,
    - Neupositionieren der Rundballenpresse (10) allgemein in Querrichtung in der entgegengesetzten Richtung versetzt bezüglich des zu einem Ballen zu formenden Schwades bei der Erzeugung eines zweiten Signals, und
    - Wiederholen der Positionier- und Neupositionierschritte, bis ein Ballen einer gewünschten Größe gebildet wurde, dadurch **gekennzeichnet,** daß das Verfahren weiterhin die folgenden Schritte umfaßt:
    - Erzeugen eines ersten Signals in Abhängigkeit von einer vorgegebenen Zunahme des Durchmessers des in der Ballenkammer (48) geformten Rundballens,
    - Erzeugen des weiteren Signals in Abhängigkeit von einer weiteren vorgegebenen Zunahme des Durchmessers des in der Ballenkammer (48) geformten Rundballens, und
    - Wiederholen der ersten und zweiten Erzeugungsschritte, so daß die Wiederholung der Positionier- und Neupositionierschritte hervorgerufen wird, bis ein Ballen mit gewünschter Größe geformt wurde.

Fig. 1

Fig. 2

# Fig. 3

40

40

52

4

72j 66 72a 72b

64 72c

72d

72e

72f

72g

72h

72i

72j

68

58

72a

60

56

70

68

54

54b

54a

12

4

# Fig. 4

66

64

70

62

72a

68

58

60

56

54

12

EP 0 287 156 B1

Fig. 5

Fig. 6

Fig. 7

Fig. 8

EP 0 287 156 B1